# EUROPEAN PATENT SPECIFICATION

(11) **EP 2 979 604 B1**
(45) Date of publication and mention of the grant of the patent: **09.05.2018**
(21) Application number: 15177111.0
(22) Date of filing: 16.07.2015
(51) Int. Cl.: A47L 15/42, F16B 21/02

(54) **INTEGRATED DISHWASHER**
INTEGRIERTE GESCHIRRSPÜLMASCHINE
LAVE-VAISSELLE INTÉGRÉ

(30) Priority: 31.07.2014 IT TO20140609
(43) Date of publication of application: 03.02.2016
(73) Proprietor: Whirlpool EMEA S.p.A., 20016 Pero (MI) (IT)
(72) Inventor: QUACQUARELLI, Ignazio, 10040 Druento (TO) (IT); GIORCELLI, Roberto, 10137 Torino (IT)
(74) Representative: Guerci, Alessandro

(56) References cited:
- EP-A1- 1 882 437
- EP-A2- 2 481 335
- DE-A1-102010 038 483
- DE-A1-102011 004 315

## Description

### [TECHNICAL FIELD]

The present invention relates to a dishwasher and to an associated spacer device.

The present invention particularly applies to dishwashers of the "integrated" type.

### [PRIOR ART]

Dishwashing machines, in particular for household use, are currently widespread. Such dishwashing machines are installed in a room by means of suitable electric and hydraulic connections, for automatically washing crockery contained therein.

Dishwashers can be stand-alone household appliances or household appliances to be "integrated" into suitable cabinets typically being parts of the kitchen furniture.

Integrated dishwashers exist which have more or less standard dimensions, which are typically compatible with 60cm or 45cm wide cabinets.

However, there is generally some variability between the width dimensions of different dishwashers, which are essentially due to construction differences between different dishwasher models. In general, there is even greater variability among the width dimensions of kitchen cabinets for integrated dishwashers; such variability is greater because of the different constructions of the furniture, which may be either standardized or hand-crafted, with shoulders of variable thickness depending on the wood in use.

When integrating a dishwasher into its housing in the kitchen furniture, difficulties of various kinds may be encountered, due to the variability of the width dimensions of both dishwashers and housings.
Mistakes may therefore be made during installation, which may impair the proper operation of the household appliance.

In fact, any errors in the positioning of the dishwasher inside the housing will cause functional problems because the dishwasher will turn out to be improperly positioned, leading to problems when opening the door or when installing the door cover panel.

Moreover, any errors in the positioning of the integrated dishwasher inside the housing will result in aesthetic problems, since an appliance which is improperly centered and out of plumb will prove to be unaesthetic in a kitchen, ruining the harmony of the furniture lines.

Document EP2481335A2 discloses a domestic appliance having a length-adjustable spacer sleeve for fastening the domestic appliance on furniture wall, by a fastening screw.

### [OBJECTS AND SUMMARY OF THE INVENTION]

It is the object of the present invention to overcome some of the problems of the prior art.

In particular, it is one object of the present invention to provide a dishwasher wherein installation errors, which may turn out to be detrimental for the proper operation of the household appliance, can be more easily avoided.

It is another object of the present invention to provide a dishwasher that can be properly installed with ease, whether by professionals or novice users.

These and other objects of the present invention are achieved through a dishwasher and an associated spacer device incorporating the features set out in the appended claims, which are an integral part of the present description.

A basic idea of the present invention is to provide a dishwasher, comprising an access door and a shell, which is adapted to be integrated into a cabinet. The dishwasher comprises at least one slot formed in the shell and located on at least one wall of the same, which is lateral relative to the access door. The dishwasher further comprises at least one spacer device configured for being inserted into the slot and protrude externally from the shell; the spacer device comprises an abutment surface adapted to abut on a surface of the cabinet for fastening the dishwasher, and comprises regulation means configured for adjusting the distance between the abutment surface and the shell, said distance being determined during the insertion of the spacer device into the slot from the outside of the shell.

This solution allows the integrated dishwasher to be correctly installed by securing it to the cabinet in a stable position thanks to cooperation from the spacer device, which abuts on the surface of the cabinet, thus effectively constraining the dishwasher in its lateral movements at a correct distance from the cabinet into which it is integrated.

In addition, the dishwasher turns out to be easy to install through the use of the spacer device, which simplifies the integration procedures.

Preferably, the distance between the abutment surface and the shell surface can be adjusted by operating the regulation means, it being determined while inserting the spacer device into the slot from the outside of the shell. This allows adjusting the subsequent fastening of the dishwasher into the cabinet in a precise and accurate manner, since this is advantageously done when the dishwasher is still at least partly out of the cabinet, thereby simplifying the adjustment and installation procedures.

In this way, the dishwasher can also be centered perfectly, thus improving the opening of the door and the installation of the door cover panels.

Preferably, the spacer device comprises a central shaft, and the regulation means comprise a plurality of retaining elements located along the central shaft with a predetermined spacing. Such retaining elements, by cooperating with respective blocking elements provided inside the slot, are configured for keeping the distance between the abutment surface and the shell as desired by the installer.

Preferably, the regulation means are configured for locking the spacer device in the slot by rotating the spacer device about its axis inside the slot, in particular by rotating it from a first insertion and regulation position to a second lock position.

Preferably, the spacer device comprises gripping means that allow the installer to rotate the spacer device more easily, thus simplifying the locking operation.

Preferably, such gripping means comprise a slit provided on the abutment surface for inserting a tool, and/or a manually graspable shaping provided on the abutment surface.

In a preferred embodiment, the spacer device further comprises a central passing hole, which puts the slot in communication with the abutment surface.

Said central passing hole allows the passage of a threaded element from the inside of the dishwasher, to be advantageously screwed to the surface of the cabinet into which the dishwasher is integrated, for further securing it.

According to another aspect, the present invention relates to a spacer device configured for use in a dishwasher.

Further objects and advantages of the present invention will become more apparent from the following detailed description and from the annexed drawings.

### [BRIEF DESCRIPTION OF THE DRAWINGS]

Some preferred and advantageous embodiments will now be described by way of non-limiting example with reference to the annexed drawings, wherein:
- Figure 1 exemplifies a dishwasher according to the present invention.
- Figure 2 is a perspective view of the spacer device according to the present invention.
- Figure 3 shows further views of the spacer device of Figure 2.
- Figure 4 shows in detail a slot formed in the dishwasher of Figure 1.
- Figure 5 exemplifies the assembling of the spacer device to the dishwashing machine.
- Figure 6 illustrates a further aspect of the assembling of the spacer device to the dishwashing machine.

The drawings show different aspects and embodiments of the present invention and, where appropriate, similar structures, components, materials and/or elements in the various drawings are designated by the same reference numerals.

### [DETAILED DESCRIPTION OF THE INVENTION]

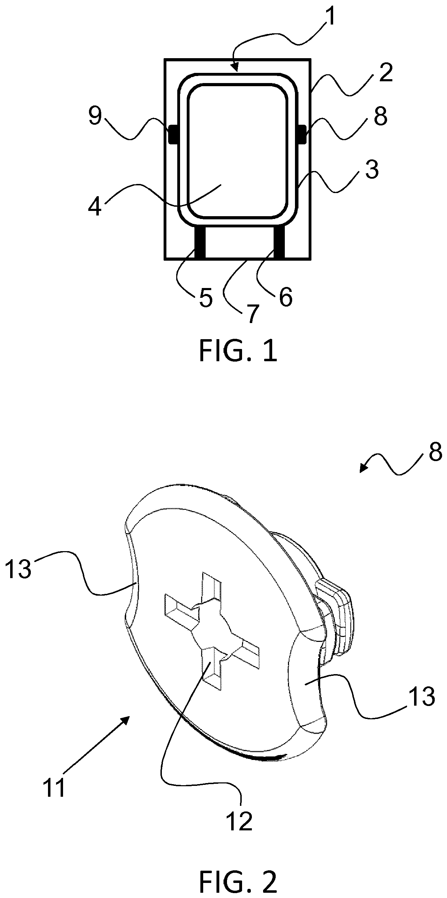

Figure 1 exemplifies an integrated dishwasher 1, i.e. a dishwasher inserted into a suitable cabinet 2. The dishwasher 1 comprises a shell 3 that defines its volume, inside of which a cavity (or tub) is formed for washing crockery. The dishwasher 1 further comprises a door 4 adapted to allow access to the wash cavity, for loading and unloading crockery. The dishwasher further comprises a plurality of feet 5 and 6, through which the dishwasher rests on the floor 7.

The dishwasher 1 further comprises two spacer devices 8 and 9 which protrude externally relative to the shell 3, each one being located on a respective one of the side walls of the dishwasher 1, i.e. the walls that are lateral relative to the access door 4, which is typically central.

In principle, the dishwasher 1 may even comprise just one of the two spacer devices 8 and 9, although such a variant will lead to worse results when fastening the integrated appliance.

Figure 2 shows in more detail a perspective view of the spacer device 8 according to the present invention. It is to be understood that the spacer device 8 is preferably identical to the above-mentioned spacer device 9.

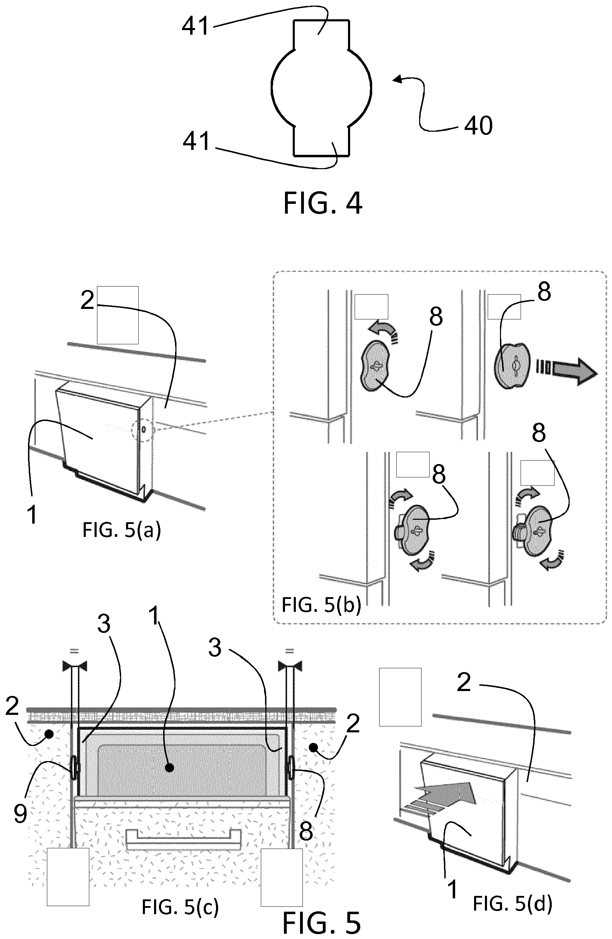

The spacer device 8 comprises an abutment surface 11, which is adapted to abut on the surface of the cabinet 2 when the dishwasher is inserted therein and the spacer device is inserted in a suitable slot, shown more in detail in Figure 4, formed on the side wall of the dishwasher 1.

Through cooperation between the abutment surface 11 and the surface of the cabinet 2, which abut against each other, the dishwasher 1 can be secured in position in a stable manner. In order to accommodate differently sized dishwashers into differently sized cabinets, the distance between the abutment surface 11 and the surface of the shell 3 can be adjusted during the integrated dishwasher installation procedure.

Furthermore, the distance between the abutment surface 11 and the surface of the cabinet 3 can be adjusted by determining it during the insertion of the spacer device 8, 9 into the slot 40 from the outside of the shell 3.

In this manner, one can adjust the projection of the spacer devices 8 and 9 from the shell 3, thereby effectively adapting the total width of the dishwasher 1 to the space available inside the cabinet 2.

The spacer device 8 further comprises gripping means that make it more easily rotatable about its axis during installation.

Such gripping means comprise, in particular, a slit 12 provided on the abutment surface 11; said slit 12 is preferably adapted to receive a tool for forcing the rotation of the spacer device 8 in order to lock it, as will be better described with reference to Figure 5. Preferably, said slit 12 is of the "cross" type.

Such gripping means (in combination with or as an alternative to the above) comprise a graspable shaping 13 formed on the abutment surface 11, e.g. a pair of cavities, or a knurl, or in general a shape suitable for improving the grip for an installer, for forcing the rotation of the spacer device 8 and locking it, as will be better described with reference to Figure 5.

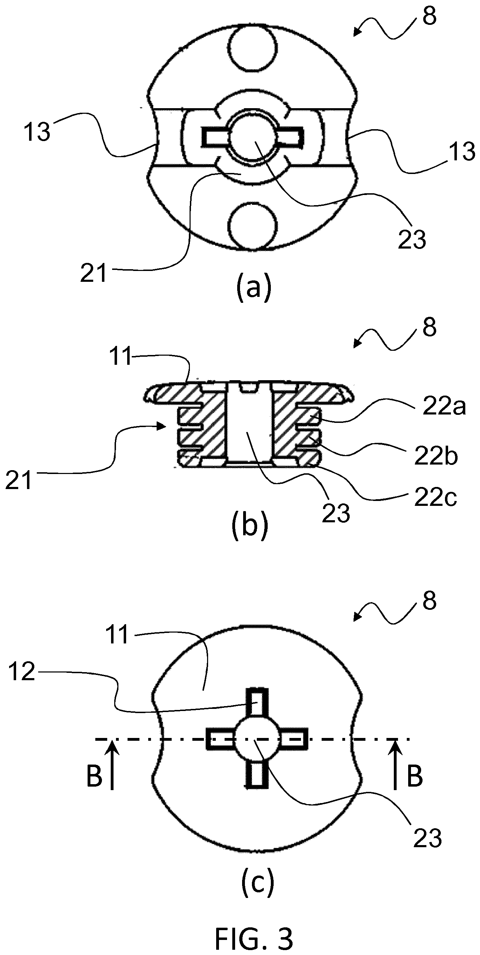

Figure 3 shows further views of the spacer device 8.

The view (a) of Figure 3 illustrates the spacer device 8 from the bottom, and shows the central shaft 21, the cross-section of which has a complex shape with a pair of protruding wings, the function of which will become apparent below.

The view (b) of Figure 3 illustrates a lateral section along line B-B of the spacer device 8. The central shaft 21 comprises a plurality of retaining elements 22a, 22b and 22c, located along the central shaft 21 with a predetermined spacing, being preferably equally spaced.

Such retaining elements 22a, 22b and 22c are configured for cooperating with respective blocking elements (not shown) formed in the lateral slot of the dishwasher 1, in which the spacer device 8 is inserted. The retaining elements 22a, 22b and 22c are therefore configured for allowing the application of the spacer device 8 to the lateral slots, in the area where it is fastened to the shell 3; at the same time, the plurality of spaced retaining elements allows a "corolla" adjustment of the distance between the abutment surface 11 and the shell 3 of the dishwasher 1. In fact, the blocking elements in the slot are configured for engaging into the grooves formed between the retaining elements 22a, 22b and 22c, thus allowing the spacer device 8 to be locked.

Preferably, the spacing between the retaining elements 22a, 22b and 22c is comprised between 2.0 mm and 3.0 mm, and the height dimension of each retaining element is comprised between 1.5 mm and 2.0 mm, so that the distance between the proximal surfaces of the retaining elements is comprised between 0.0 mm and 1.0 mm, being preferably 0.5 mm.

In this way, it is possible to vary the lateral position of the dishwasher 1 by about 2 or 3 mm, giving the installer the possibility of accurately centering the dishwasher 1 inside the cabinet 2. In fact, should it be necessary, the installer will be able to increase the protrusion of the spacer devices 8 and 9 by directly adjusting them.

In particular, the retaining elements 22a, 22b, 22c are adjustment means configured for determining the protrusion of the spacer devices prior to inserting the dishwasher 1 into the cabinet 2.

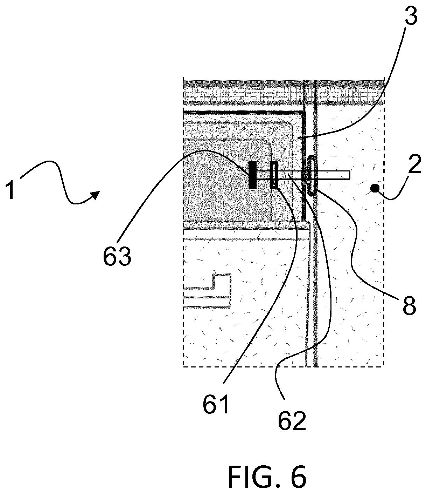

The spacer device 8 further comprises a central passing hole 23 adapted to put the slot in communication with the abutment surface, for the purpose that will be illustrated below with reference to Figure 6.

The view (c) of Figure 3 shows the spacer device 8 from the top; in particular, it clearly shows the abutment surface 11.

Preferably, the spacer device 8 is made of polypropylene charged with 30% talc (PP-T30).

Figure 4 shows in detail a slot 40 formed in the side walls of the shell 3 of the dishwasher 1. Such a slot 40 is, in particular, formed in each one of the two lateral metal sheets of the dishwashing machine 1.

The slot 40 has a shape which is compatible with the retaining elements 22a, 22b and 22c of the central shaft 21 of each one of the spacer devices 8 and 9.

In other words, it is possible to partially insert the spacer device into the slot 40, and to lock it during the insertion in order to adjust the distance between the shell 3 and the abutment surface 11 as already described.

In a preferred embodiment, the regulation means that allow adjusting this distance have the retaining elements 22a, 22b and 22c on the central shaft 21, cooperating with respective blocking elements of the slot 40.

The retaining elements 22a, 22b and 22c can thus enter the slot 40 by passing through the side wings 41; once the central shaft 21 has been inserted to the desired distance, the installer can turn the spacer device 8 about its axis, preferably by 90°, from the first insertion and regulation position.

In this manner, the retaining elements 22a, 22b and 22c will be positioned transversally to the slot 40, into a second lock position in which the spacer device 8 can neither exit from nor further enter into the slot 40, thereby adjusting and fixing the distance between the abutment surface 11 and the shell 3 of the dishwasher 1.

Figure 5 exemplifies the assembling of the spacer device 8 to the dishwashing machine 1.

The view (a) of Figure 5 represents the dishwashing machine 1 when it has not yet been inserted into the cabinet.

The view (b) of Figure 5 illustrates the adjustment of the spacer device 8, which, once inserted in the slot, can be unlocked by turning it by 90°, preferably counterclockwise.

The spacer device 8 can then be extracted by the desired distance.

The spacer device 8 can then be locked into the desired lock position again by turning it in the opposite direction, preferably clockwise.

The spacer device 8 can be locked into any one of the plurality of available lock positions, so as to better adapt it to particular installation dimensions of the dishwasher 1.

The view (c) of Figure 5 represents the best installation of the dishwashing machine 1, obtained by means of the present invention: the spacer devices 8 and 9 are placed in the interspace between the shoulders of the cabinet 2 and the shell 3 of the dishwasher 1. Such spacer devices are adjusted in a manner such that the total width of the dishwasher 1 will advantageously match the dimension of the cabinet.

The view (d) of Figure 4 shows the dishwasher 1 being pushed forwards into the recess of the cabinet 2: advantageously, the centering of the dishwasher 1 takes place when it has not yet been fully inserted, so that the installer can work more comfortably and effectively while encountering less difficulty.

Figure 6 illustrates a further aspect of the assembling of the spacer device 8 to the dishwashing machine.

As aforementioned, the spacer device 8 comprises a central passing hole 23. Likewise, the dishwashing machine 1 comprises a passing hole extending outwards through the slot 40, which is accessible through the access door 4, and preferably comprises a suitable centering bushing 61 guiding towards the passing hole. When the spacer device 8 is installed in the slot 40, it is possible to insert a threaded element 62 through the centering bushing 61, the passing hole of the dishwasher 1 and the central passing hole 23, to be then screwed into the body of the cabinet 2, e.g. by acting upon a head 63 of the threaded element 62.

In this way, the dishwasher 1 can be constrained, i.e. screwed, to the shoulders of the cabinet 2. It must be pointed out that the presence of the spacer devices 8 (and 9) according to the present invention contributes to significantly improving the installation of the dishwasher 1, since the action of the abutment surfaces 11 on the shoulders of the cabinet 2 prevents the walls of the shell 3 and of the wash cavity from bending, as would be the case if only the threaded element 62 were used without interposing the spacer device 8; in fact, in such a case the threaded elements would exert an outward pulling force that would jeopardize the structural stability of the dishwasher, while also impairing its liquid tightness.

It is obvious that, in the light of the teachings of the present description, the man skilled in the art may conceive further variants of the present invention, without however departing from the protection scope as defined by the appended claims.

For example, it should not be excluded that the dishwasher might comprise a number of spacer devices other than two; they may also be more, e.g. four.

Moreover, it should not be excluded that the dishwasher might be able to receive spacer devices sold separately from the dishwasher itself.

A dishwasher according to the present invention may additionally use prior-art teachings as far as materials, construction details, equipment and functions are concerned: all those aspects of the dishwashing machine that have not been described herein may therefore vary, provided that they are not in conflict with the teachings of the present invention.

## Claims

1. Dishwasher (1) comprising an access door (4) and a shell (3), said dishwasher (1) being adapted to be integrated into a cabinet (2) and comprising at least one slot (40) formed in said shell (3) and located on at least one wall of said shell (3) which is lateral relative to said access door (4), and further comprising at least one spacer device (8, 9) configured for being inserted into said slot (40) and externally protruding from said shell (3), said spacer device (8, 9) comprising a central shaft (21), an abutment surface (11) adapted to abut on a surface of said cabinet (2) for fastening said dishwasher (1) and regulation means (22a, 22b, 22c) configured for adjusting the distance between said abutment surface (11) and said shell (3), **characterized in that** said regulation means comprise a plurality of retaining elements (22a, 22b, 22c) located along said central shaft (21) with a predetermined spacing, and configured for cooperating with respective blocking elements provided inside the slot (40) for maintaining said distance between the abutment surface (11) and the shell (3), wherein said distance is adjustable during the insertion of said spacer device (8, 9) into said slot (40) from the outside of said shell (3) and prior to integrate said dishwasher (1) into said cabinet (2).

2. Dishwasher according to claim 1, wherein said regulation means (22a, 22b, 22c) are configured for locking said spacer device (8, 9) in said slot (40) by rotating said spacer device (8) about its axis inside said slot (40) from a first insertion and regulation position to a second lock position.

3. Dishwasher according to claim 2, wherein said spacer device (8, 9) further comprises gripping means (12, 13) adapted to allow a user to rotate said spacer device (8) from outside said slot (40).

4. Dishwasher according to claim 3, wherein said gripping means comprise a slit (12) provided on said abutment surface (11) for inserting a tool, and/or a manually graspable shaping (13) provided on said abutment surface (11).

5. Dishwasher according to any one of claims 1 to 4, wherein said spacer device (8, 9) further comprises a central passing hole (23) adapted to connect said slot (40) to said abutment surface (11).

6. Dishwasher according to claim 5, wherein said dishwasher (1) is configured for allowing the passage of a threaded element (62) from its inside (61), which is accessible via said access door (3), through said central passing hole (23), wherein said threaded element (62) is adapted to be screwed to said surface of said cabinet (2) for further securing said dishwasher (1) once it has been inserted into said cabinet (2).

## Patentansprüche

1. Geschirrspülmaschine (1) umfassend eine Zugangstür (4) und eine Hülle (3), wobei die Geschirrspülmaschine (1) ausgebildet ist, in einen Schrank (2) integriert zu werden und mindestens einen Schlitz (40) umfasst, der in der Hülle (3) ausgebildet ist und sich an mindestens einer Wand der Hülle (3) befindet, die seitlich zu der Zugangstür (4) ist, und weiter mindestens eine Abstandshaltervorrichtung (8, 9) umfasst, die so konfiguriert ist, dass sie in den Schlitz (40) eingeführt wird und von der Hülle (3) nach außen vorsteht, wobei die Abstandhaltervorrichtung (8, 9) eine Zentralwelle (21) und eine Anlagefläche (11) umfasst, die dazu ausgebildet ist, an einer Oberfläche des Schrankes (2) zur Befestigung der Geschirrspülmaschine (1) anzuliegen und Reguliermittel (22a, 22b, 22c) umfasst, die zur Einstellung des Abstandes zwischen der Anlagefläche (11) und der Hülle (3) konfiguriert sind, **dadurch gekennzeichnet, dass**
die Reguliermittel eine Mehrzahl von Halteelementen (22a, 22b, 22c) umfassen, die entlang der Zentralwelle (21) mit einem vorbestimmten Abstand angeordnet sind und zur Zusammenwirkung mit entsprechenden Blockierelementen konfiguriert sind, die innerhalb des Schlitzes (40) vorgesehen sind, um den Abstand zwischen der Anlagefläche (11) und der Hülle (3) aufrechtzuerhalten, wobei der Abstand während des Einsetzens der Abstandshaltervorrichtung (8, 9) in den Schlitz (40) von der Außenseite der Hülle (3) und vor dem Integrieren der Geschirrspülmaschine (1) in den Schrank (2) einstellbar ist.

2. Geschirrspülmaschine nach Anspruch 1, wobei die Reguliermittel (22a, 22b, 22c) zur Verriegelung der Abstandshaltervorrichtung (8, 9) in dem Schlitz (40) durch Drehung der Abstandshaltervorrichtung (8) um ihre Achse innerhalb des Schlitzes (40) von einer ersten Einführ- und Regulierungsposition zu einer zweiten Verriegelungsposition konfiguriert sind.

3. Geschirrspülmaschine nach Anspruch 2, wobei die Abstandhaltevorrichtung (8, 9) weiter Greifmittel (12, 13) umfasst, die es einem Benutzer ermöglichen, die Abstandhaltevorrichtung (8) von außerhalb des Schlitzes (40) zu drehen.

4. Geschirrspülmaschine nach Anspruch 3, wobei die Greifmittel einen an der Anlagefläche (11) vorgesehenen Schlitz (12) zur Einführung eines Werkzeuges und/oder eine von Hand greifbare Formung (13) an der Anlagefläche (11) umfassen.

5. Geschirrspülmaschine nach einem der Ansprüche 1 bis 4, wobei die Abstandshaltervorrichtung (8, 9) weiter ein zentrales Durchgangsloch (23) umfasst, das angepasst ist, um den Schlitz (40) mit der Anlagefläche (11) zu verbinden.

6. Geschirrspülmaschine nach Anspruch 5, wobei die Geschirrspülmaschine (1) so konfiguriert ist, dass sie den Durchgang eines Gewindeelements (62) von ihrer Innenseite (61), die über die Zugangstür (3) zugänglich ist, durch das zentrale Durchgangsloch (23) ermöglicht, wobei das Gewindeelement (62) angepasst ist, um an die Oberfläche des Schrankes (2) geschraubt zu werden, um die Geschirrspülmaschine (1) weiter zu sichern, sobald sie in den Schrank (2) eingeführt worden ist.

## Revendications

1. Lave-vaisselle (1) comprenant une porte d'accès (4) et une enceinte (3), ledit lave-vaisselle (1) étant conçu pour être intégré dans un caisson (2) et comprenant au moins une découpe (40) formée dans ladite enceinte (3) et située sur au moins une paroi de ladite enceinte (3) qui est latérale par rapport à ladite porte d'accès (4), et comprenant en outre au moins un dispositif d'écartement (8, 9) configuré pour être inséré dans ladite découpe (40) et dépasser extérieurement à partir de ladite enceinte (3), ledit dispositif d'écartement (8, 9) comprenant une tige centrale (21), une surface de butée (11) conçue pour buter sur une surface dudit caisson (2) pour attacher ledit lave-vaisselle (1) et des moyens de réglage (22a, 22b, 22c) configurés pour ajuster la distance entre ladite surface de butée (11) et ladite enceinte (3), **caractérisé en ce que**
ledit moyen de réglage comprend une pluralité d'éléments de retenue (22a, 22b, 22c) situés le long de ladite tige centrale (21) avec un espacement prédéterminé, et configurés pour coopérer avec des éléments de blocage respectifs prévus à l'intérieur de la découpe (40) pour maintenir ladite distance entre la surface de butée (11) et l'enceinte (3), dans lequel ladite distance est ajustable pendant l'insertion dudit dispositif d'écartement (8, 9) dans ladite découpe (40) à partir de l'extérieur de ladite enceinte (3) et avant d'intégrer ledit lave-vaisselle (1) dans ledit caisson (2).

2. Lave-vaisselle selon la revendication 1, dans lequel lesdits moyens de réglage (22a, 22b, 22c) sont configurés pour verrouiller ledit dispositif d'écartement (8, 9) dans ladite découpe (40) en tournant ledit dispositif d'écartement (8) autour de son axe à l'intérieur de ladite découpe (40) à partir d'une première position d'insertion et de réglage jusqu'à une seconde position de verrouillage.

3. Lave-vaisselle selon la revendication 2, dans lequel ledit dispositif d'écartement (8, 9) comprend en outre un moyen de saisie (12, 13) conçu pour permettre à un utilisateur de tourner ledit dispositif d'écartement (8) à partir de l'extérieur de ladite découpe (40).

4. Lave-vaisselle selon la revendication 3, dans lequel ledit moyen de saisie comprend une rainure (12) prévue sur ladite surface de butée (11) pour insérer un outil, et/ou une forme pouvant être saisie à la main (13) prévue sur ladite surface de butée (11).

5. Lave-vaisselle selon l'une quelconque des revendications 1 à 4, dans lequel ledit dispositif d'écartement (8, 9) comprend en outre un trou de passage central (23) conçu pour relier ladite découpe (40) à ladite surface de butée (11).

6. Lave-vaisselle selon la revendication 5, dans lequel ledit lave-vaisselle (1) est configuré pour permettre le passage d'un élément fileté (62) à partir de son intérieur (61), qui est accessible via ladite porte d'accès (3), à travers ledit trou de passage central (23), dans lequel ledit élément fileté (62) est conçu pour être vissé à ladite surface dudit caisson (2) pour fixer davantage ledit lave-vaisselle (1) une fois qu'il a été inséré dans ledit caisson (2).
